# FASCICULE DE BREVET EUROPEEN

(11) **EP 2 079 034 B1**
(45) Date de publication et mention de la délivrance du brevet: **11.07.2012**
(21) Numéro de dépôt: 08172025.2
(22) Date de dépôt: 17.12.2008
(51) Int. Cl.: G06F 21/00, G06F 21/02

(54) **Procédé de sécurisation d'un microprocesseur, programme d'ordinateur et dispositif correspondants**
Sicherungsverfahren eines Mikroprozessors, entsprechendes Computerprogramm und entsprechende Vorrichtung
Method for securing a microprocessor, corresponding device and computer program

(30) Priorité: 26.12.2007 FR 0760359
(43) Date de publication de la demande: 15.07.2009
(73) Titulaire: Compagnie Industrielle et Financiere d'Ingenierie Ingenico, 92220 Neuilly sur Seine (FR)
(72) Inventeur: Naccache, David, 75018 Paris (FR); Dabbous, Nora, 92150 Suresnes (FR)
(74) Mandataire: Bioret, Ludovic

(56) Documents cités:
- DE-A1- 19 828 936
- FR-A- 2 860 933
- US-A1- 2001 016 910
- HAGAI BAR-EL ET AL: "The Sorcerer's Apprentice Guide to Fault Attacks" INTERNET CITATION, [Online] XP002329915 Extrait de l'Internet: URL:http://web.archive.org/web/20041016071 838/eprint.iacr.org/2004/100> [extrait le 2005-05-27]
- KOMMERLING O ET AL: "Design principles for tamper-resistant smart card processors" USENIX WORKSHOP ON SMARTCARD TECHNOLOGY, XX, XX, 1 janvier 1900 (1900-01-01), pages 9-20, XP002322251

## Description

### 1. Domaine de l'invention

Le domaine de l'invention est celui de la sécurisation d'objets à microprocesseur, appelé aussi puce électronique, et/ou de programmes destinés à être intégrés dans de tels objets à puce électronique.

L'invention s'applique notamment aux microprocesseurs et/ou programmes intégrés dans des cartes à puce. On décrit donc par la suite essentiellement de telles cartes à puce, mais l'invention peut aisément être mise en oeuvre pour tout type d'objet, notamment portatif, équipé d'une telle puce, quelle que soit la nature de cette dernière.

### 2. Art antérieur

On utilise depuis longtemps des cartes à puce, notamment pour identifier ou authentifier un produit, un compte et/ou une personne. La puce, ou microprocesseur, présente donc une structure spécifique de transistors, définissant une logique de traitement et des zones de mémoire, dont au moins une partie sécurisée, contenant des données secrètes.

Les documents XP002322251 (KOMMERLING O ET AL « Design Principles for tamper-resistant smart card processors ») et XP002329915 (HAGAI BAR-EL ET AL « The Sorcerer's Apprentice Guide to Fault Attacks ») répertorient différents types classique d'attaques, visant à deviner ces données secrètes, et les moyens de s'en protéger.

Ces données secrètes, encore appelées données sécurisées ou critiques, font l'objet de différents types de mesures de protection, par exemple pour empêcher le clonage des cartes dans lesquelles elles sont stockées, ou l'obtention d'informations (un code secret d'identification) permettant une utilisation frauduleuse d'une carte volée.

Par exemple, une technique de sécurisation consiste à stocker ces données dans des zones mémoire non accessibles, non modifiables.

Il existe aussi des mesures de protection appelées contre-mesures, qui consistent à cacher la consommation de courant d'une carte à un "observateur extérieur", pendant le fonctionnement de la carte, en brouillant cette consommation ou en présentant une consommation chaotique de courant, non représentative de la consommation réelle de courant dans la carte.

En effet, à défaut de pouvoir accéder aux données critiques, une personne mal intentionnée peut obtenir, en observant la consommation de courant d'une carte pendant son fonctionnement, des informations exploitables sur les opérations logiques mises en oeuvre.

La mise en oeuvre de ces contre-mesures permet donc de cacher la consommation de courant d'une carte pendant son fonctionnement.

Cette technique correspond par exemple à l'activation d'opérations logiques supplémentaires, non nécessaires au fonctionnement de la carte, et qui entraînent une consommation supplémentaire de courant, non représentative du fonctionnement réel de la carte.

Ces contre-mesures peuvent être activées systématiquement pendant le fonctionnement de la carte, de manière à assurer la protection des données critiques pouvant être manipulées pendant le fonctionnement, comme divulgué par exemple par le document FR 2860 933 A.

Un inconvénient de cette technique de l'art antérieur réside dans le fait que l'activation de ces contre-mesures est coûteuse en terme de consommation d'énergie de la carte.

De plus, un autre inconvénient tient au fait que l'activation d'opérations supplémentaires est coûteuse en terme de taille de code.

Enfin, cette technique de sécurisation basée sur l'activation de contre-mesures est également coûteuse en temps de programmation.

Il existe une autre technique de sécurisation par contre-mesures, limitant les inconvénients cités ci-dessus, et consistant à activer les contre-mesures seulement à certains moments du fonctionnement de la carte, comme divulgué par exemple par les documents US 2001/016910 A1 ou DE 198 28 936 A1.

Par exemple, le programme principal assurant le fonctionnement de la carte peut être modifié de façon à prévoir d'activer des contre-mesures à des moments définis comme critiques. Par exemple, ces moments peuvent correspondre à des parties de code du programme, ou des actions programmées, qui manipulent des données identifiées comme critiques. Ces moments critiques sont identifiés par l'auteur du programme.

Un inconvénient de cette technique réside dans le fait qu'elle ne garantit pas que toutes les données critiques sont bien sécurisées, car le programmeur peut avoir oublié d'identifier une partie du code comme étant critique, ou avoir mal jugé du niveau de sécurité d'une action ou d'une partie de code.

### 3. Exposé de l'invention

L'invention propose une solution nouvelle qui ne présente pas l'ensemble de ces inconvénients de l'art antérieur, sous la forme d'un procédé de sécurisation d'un microprocesseur contenant au moins un programme principal, coopérant avec au moins une mémoire, ledit procédé comprenant une étape de mise en oeuvre de contre-mesures, pendant laquelle des opérations supplémentaires, non nécessaires audit programme principal, sont mises en oeuvre de façon à modifier la consommation de courant et/ou le temps de traitement dudit microprocesseur.

Selon l'invention, un tel procédé comprend les étapes suivantes :
- identification d'au moins une adresse ou une zone mémoire de la ou desdites mémoires, dites adresses critiques, et contenant, ou susceptible de contenir, des données critiques pour ledit programme principal ;
- surveillance des ports d'adressage de la ou desdites mémoires, de façon à détecter un accès à la ou auxdites adresses critiques ;
- activation de ladite étape de mise en oeuvre de contre-mesures, lorsqu'un accès à la ou auxdites adresses critiques est détecté.

Ainsi, l'invention repose sur une approche nouvelle et inventive de la sécurisation d'un microprocesseur, basée sur l'identification de zones ou d'adresses mémoire de stockage pour des données critiques servant au fonctionnement du microprocesseur, et sur l'activation de contre-mesures à chaque accès à une ou plusieurs des zones ou adresses préalablement identifiées.

Par exemple, ces données servent à un programme principal qui assure le fonctionnement du microprocesseur. Des données critiques pour un tel microprocesseur peuvent correspondre par exemple à des codes d'identification pour une carte servant au paiement électronique, ou à des informations biométriques, par exemple pour une carte permettant un accès sécurisé nécessitant l'authentification de son utilisateur. Ces données peuvent également être utilisées par un ou plusieurs périphériques dialoguant avec la carte.

Contrairement aux techniques de l'art antérieur qui identifiaient les données critiques elles-mêmes pour tenter de les protéger, le procédé selon l'invention identifie les zones mémoire où sont stockées ces données et sécurise tous les accès à ces zones mémoire, sécurisant ainsi les données elles-mêmes.

La sécurisation de la carte est assurée par l'activation de contre-mesures, permettant de brouiller le courant pendant les moments où le fonctionnement de la carte nécessite un accès à une ou plusieurs données critiques.

Le procédé selon l'invention permet une optimisation de l'utilisation des contre-mesures, uniquement pendant les moments "cruciaux" du fonctionnement de la carte, et non plus systématiquement pendant le fonctionnement.

Le procédé comprend en particulier une étape de surveillance des ports d'adressage de la ou desdites mémoires.

Ainsi, chaque accès à une adresse critique, par le programme principal de la carte, ou par un des périphériques, est surveillé et détecté, de façon à activer des contre-mesures. Ainsi, la surveillance de tous les accès aux adresses mémoire identifiées comme critiques (car stockant des données critiques), permet d'optimiser la sécurisation de ces données critiques, de manière indépendante du choix de l'auteur d'un programme, contrairement à une technique de l'art antérieur. En effet, toutes les données critiques étant stockées dans des zones mémoire identifiées elles-mêmes comme critiques, la surveillance systématique des accès, en lecture, écriture, exécution de code, etc, à ces zones mémoire permet d'activer des contre-mesures à chaque fois qu'une de ces données critiques est manipulée.

Selon un aspect particulier de l'invention, le procédé comprend une étape d'interruption de ladite étape de mise en oeuvre de contre-mesures, dès que la ou lesdites adresses critiques ne sont plus utilisées.

Ainsi, les contre-mesures sont désactivées dès que les adresses identifiées comme critiques ne sont plus utilisées, de manière à limiter les effets coûteux, en terme de temps, de consommation de courant, etc, de l'activation des contre-mesures.

En effet, ces dernières ne sont activées qu'au moment où une ou plusieurs données critiques sont manipulées, ce moment étant détecté par une surveillance de l'accès aux adresses critiques préalablement identifiées.

Par exemple, ladite étape de mise en oeuvre de contre-mesures comprend au moins une des opérations appartenant au groupe suivant :
- réalisation d'opérations mathématiques ou logiques aléatoires ;
- duplication d'opérations effectuées par ledit programme principal ;
- lancement d'un programme secondaire de camouflage.

Ainsi, les contre-mesures peuvent par exemple correspondre à des opérations mathématiques ou logiques ne servant pas au fonctionnement proprement dit de la carte, mais entraînant une surconsommation de courant, empêchant un observateur de distinguer les opérations utiles, et les données critiques manipulées, des opérations liées aux contre-mesures.

Les contre-mesures peuvent correspondre à des opérations du programme principal, par exemple des opérations dupliquées, ou des opérations d'un programme secondaire, appelé programme de camouflage, comprenant uniquement des opérations de contre-mesures, et éventuellement le code de surveillance des ports d'adressage.

Selon un mode de réalisation, ladite étape d'identification désigne au moins une adresse ou une zone mémoire comprenant au moins un des éléments appartenant au groupe comprenant :
- une portion de code dudit programme principal ;
- des données sécurisées.

Ainsi, les adresses critiques peuvent être identifiées comme des adresses auxquelles sont stockées directement des données critiques, ou bien des adresses où sont stockées des portions de code jugées également critiques en elles-mêmes. Des données critiques peuvent être par exemple des informations biométriques, des codes d'identification, etc.

En particulier, lesdites mémoires appartiennent au groupe comprenant :
- les mémoires RAM ;
- les mémoires ROM ;
- les mémoires EPROM ;
- les mémoires EEPROM ;
- les mémoires flash.

Un autre aspect de l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de sécurisation tel que décrit précédemment.

L'invention concerne également un dispositif à microprocesseur sécurisé contenant au moins un programme principal, coopérant avec au moins une mémoire, ledit dispositif comprenant des moyens de mise en oeuvre de contre-mesures, pendant laquelle des opérations supplémentaires, non nécessaires audit programme principal, sont mises en oeuvre de façon à modifier la consommation de courant et/ou le temps de traitement dudit microprocesseur.

Selon l'invention, un tel dispositif comprend :
- des moyens d'identification d'au moins une adresse ou une zone mémoire de la ou desdites mémoires, dites adresses critiques, et contenant, ou susceptible de contenir, des données critiques pour ledit programme principal ;
- des moyens de surveillance des ports d'adressage de la ou desdites mémoires, de façon à détecter un accès à la ou auxdites adresses critiques ;
- des moyens d'activation de ladite étape de mise en oeuvre de contre-mesures, lorsqu'un accès à la ou auxdites adresses critiques est détecté.

Un tel dispositif est notamment apte à mettre en oeuvre le procédé de sécurisation décrit précédemment.

Par exemple, un tel dispositif se présente sous la forme d'une carte à microprocesseur.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente les principales étapes du procédé selon l'invention ;
- la figure 2 illustre un exemple d'un dispositif de sécurisation mettant en oeuvre une technique de sécurisation selon un mode de réalisation de l'invention.

### 5. Description d'un mode de réalisation de l'invention

### 5.1 Principe général

Le principe général de l'invention repose sur l'identification et la surveillance d'adresses mémoire, ou de zones mémoire, critiques, c'est-à-dire dans lesquelles sont stockées, ou peuvent être stockées, des données critiques, dans un microprocesseur. A chaque accès à l'une de ces adresses critiques sont activées des contre-mesures, permettant la sécurisation des données manipulées lors de ces accès mémoire.

Le procédé selon l'invention permet l'optimisation de l'activation des contre-mesures à des moments cruciaux du fonctionnement du microprocesseur, et donc l'optimisation de la sécurisation de données critiques dans le microprocesseur.

### 5.2 Description d'un mode de réalisation

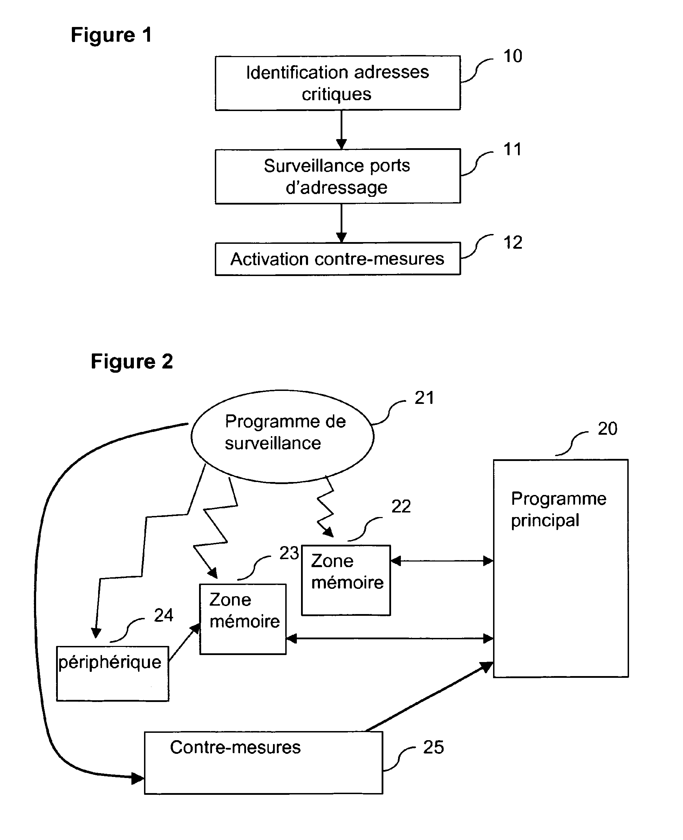

On présente, en relation avec les figures 1 et 2, les principales étapes du procédé de sécurisation selon un mode de réalisation de l'invention.

On considère un microprocesseur, ou une carte, contenant au moins un programme principal 20. Par exemple, cette carte est une carte de paiement électronique. Un utilisateur peut s'en servir pour un paiement électronique, ou pour un retrait d'espèces à un distributeur, et doit s'identifier avec un code personnel. Ce code personnel fait notamment partie des données critiques à sécuriser, et donc à sauvegarder dans une ou plusieurs zones mémoire spécifiques coopérant avec le microprocesseur. La partie de code permettant l'authentification de l'utilisateur de la carte peut également faire partie des données à sécuriser. Certaines informations concernant par exemple les coordonnées bancaires de l'utilisateur peuvent également être stockées dans une zone mémoire à sécuriser.

Lors d'une première étape 10, le procédé de sécurisation selon l'invention identifie une ou plusieurs zones mémoire 22, 23, contenant ou susceptibles de contenir des données critiques. Ces zones mémoire, 22, 23 peuvent être utilisées par le programme principal, ou par un ou plusieurs périphériques 24 interagissant avec le microprocesseur.

Ces zones mémoire sont repérées par des ports d'adressage, et contiennent notamment les données critiques décrites ci-dessus, telles que le code d'identification de l'utilisateur, ses coordonnées bancaires, et la partie du programme principal permettant l'authentification de l'utilisateur. Une fois ces zones mémoire identifiées, l'auteur du programme principal doit en tenir compte pour stocker toutes les données critiques utilisées dans le programme principal dans ces zones mémoire spécifiques.

Ainsi, contrairement à l'art antérieur où les actions à sécuriser doivent être identifiées avant, ou au moment de la programmation du programme principal, pour activer en conséquence les contre-mesures, les zones mémoire sont ici identifiées avant la programmation, et l'auteur du programme doit simplement en tenir compte pour y stocker les données critiques.

Selon ce mode de réalisation de l'invention, un programme de surveillance 21, distinct du programme principal, est chargé de surveiller, lors d'une étape 11, les ports d'adressage de ces zones mémoire 22, 23, préalablement identifiées.

Ainsi, dès que le programme principal 20, ou un périphérique 24, accède à une des zones mémoire, 22, 23, le programme de surveillance émet une alerte, activant les contre-mesures 25 prévues pour sécuriser les données manipulées par l'accès mémoire en question. Cette activation des contre-mesures (étape 12), correspond par exemple à l'activation d'un drapeau, indiquant qu'un accès à une adresse mémoire critique est en cours.

Par exemple, le programme de surveillance peut comprendre une succession de tests, consistant à détecter tous les accès aux ports d'adressage des zones mémoire 22, 23, et à activer des contre-mesures à chaque détection positive.

Les contre-mesures 25 peuvent être décrites dans le programme de surveillance et peuvent correspondre par exemple à une succession d'opérations mathématiques aléatoires, mises en oeuvre pendant toute la durée de l'accès à l'adresse mémoire détectée.

Ainsi, toutes les actions relatives à l'accès à l'adresse mémoire, c'est-à-dire toutes les actions manipulant une ou plusieurs données critiques, sont masquées par des contre-mesures activées pendant toute la durée de l'accès mémoire, et ainsi sécurisées.

A la fin de chaque accès à une zone mémoire critique 22, 23, les contre-mesures sont désactivées, pour éviter une surconsommation de courant inutile.

Selon une variante de ce mode de réalisation, des contre-mesures supplémentaires peuvent également être mises en oeuvre, dans le programme principal. Par exemple, l'auteur du programme principal peut souhaiter sécuriser une partie du code du programme principal, ne faisant pas intervenir de données critiques, mais nécessitant selon lui un certain degré de sécurité. Il peut alors activer des contre-mesures, en activant un drapeau dans le code, selon le même principe que l'activation des contre-mesures décrit précédemment.

## Revendications

1. Procédé de sécurisation d'un microprocesseur contenant au moins un programme principal, coopérant avec au moins une mémoire, ledit procédé comprenant une étape de mise en oeuvre de contre-mesures, pendant laquelle des opérations supplémentaires, non nécessaires audit programme principal, sont mises en oeuvre de façon à modifier la consommation de courant et/ou le temps de traitement dudit microprocesseur lors de l'utilisation d'une portion de code critique pour ledit programme principal,
**caractérisé en ce qu'**il comprend les étapes suivantes :
- identification d'au moins une zone mémoire de la ou desdites mémoires, dites zones critiques, et contenant, ou susceptible de contenir, ladite portion de code ;
- surveillance des ports d'adressage de la ou desdites mémoires, de façon à détecter un accès à la ou auxdites zones critiques ;
- activation de ladite étape de mise en oeuvre de contre-mesures, lorsqu'un accès à la ou auxdites zones critiques est détecté.

2. Procédé selon la revendication 1, **caractérisé en ce qu'**il comprend une étape d'interruption de ladite étape de mise en oeuvre de contre-mesures, dès que la ou lesdites zones critiques ne sont plus utilisées.

3. Procédé selon l'une quelconque des revendications 1 et 2, **caractérisé en ce que** ladite étape de mise en oeuvre de contre-mesures comprend au moins une des opérations appartenant au groupe suivant :
- réalisation d'opérations mathématiques ou logiques aléatoires ;
- duplication d'opérations effectuées par ledit programme principal ;
- lancement d'un programme secondaire de camouflage.

4. Procédé selon l'une quelconque des revendications 1 à 3, **caractérisé en ce que** lesdites mémoires appartiennent au groupe comprenant :
- les mémoires RAM ;
- les mémoires ROM ;
- les mémoires EPROM ;
- les mémoires EEPROM ;
- les mémoires flash.

5. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de sécurisation selon l'une au moins des revendications 1 à 4.

6. Dispositif à microprocesseur sécurisé contenant au moins un programme principal, coopérant avec au moins une mémoire, ledit dispositif comprenant des moyens de mise en oeuvre de contre-mesures, pendant laquelle des opérations supplémentaires, non nécessaires audit programme principal, sont mises en oeuvre de façon à modifier la consommation de courant et/ou le temps de traitement dudit microprocesseur, lors de l'utilisation d'une portion de code critique pour ledit programme principal,
**caractérisé en ce qu'**il comprend :
- des moyens d'identification d'au moins une zone mémoire de la ou desdites mémoires, dites zones critiques, et contenant, ou susceptible de contenir, ladite portion de code ;
- des moyens de surveillance des ports d'adressage de la ou desdites mémoires, de façon à détecter un accès à la ou auxdites zones critiques ;
- des moyens d'activation de ladite étape de mise en oeuvre de contre-mesures, lorsqu'un accès à la ou auxdites zones critiques est détecté.

7. Dispositif selon la revendication 6, **caractérisé en ce qu'**il se présente sous la forme d'une carte à microprocesseur.

## Claims

1. Method for securing a microprocessor containing at least one main program, which operates with at least one memory, wherein said method comprises a step for implementing counter-measures, during which additional operations, that are not required for said main program, are implemented so as to modify the consumption of current and/or the processing time of said microprocessor when a portion of code critical for said main program is used, and wherein the method comprises the following steps:
- identification of at least one memory zone of said memory(ies), called critical zones, and which contain, or which may contain, said portion of code;
- monitoring of the addressing ports of said memory(ies), so as to detect the access to said critical zones;
- activation of said step for implementing counter-measures, when an access to said critical zones is detected.

2. Method according to claim 1, **characterised in that** it comprises a step which interrupts said step for implementing counter-measures, as soon as said critical zones are no longer used.

3. Method according to any of claims 1 and 2, wherein said step for implementating counter-measures comprises at least one of the operations from the following group:
- the carrying out of random mathematical or logic operations;
- the duplication of operations carried out by said main program;
- the launch of a secondary camouflage program.

4. Method according to any of claims 1 to 3, **characterised in that** said memories belong to the group comprising:
- RAM memories;
- ROM memories;
- EPROM memories;
- EEPROM memories;
- flash memories.

5. Computer program product that can be downloaded from a communication network and/or saved onto a support that can be read by a computer and/or run by a processor, wherein said program comprises program code instructions for the implementation of the security method according to any of at least claims 1 to 4.

6. Secure microprocessor device containing at least one main program, which operates with at least one memory, wherein said device comprises means of implementing counter-measures, during which additional operations, that are not required for said main program, are implemented so as to modify the consumption of current and/or the processing time of said microprocessor when a portion of code critical for said main program is used, and wherein said device comprises:
- means of identifying at least one memory zone of said memory(ies), called critical zones, and containing, or likely to contain, said portion of code;
- means of monitoring addressing ports of said memory(ies), so as to detect an access to said critical zones;
- means of activating said means for implementing counter-measures, when an access to said critical zones is detected.

7. Device according to claim 6, wherein said device is in the form of a microprocessor card.

## Patentansprüche

1. Verfahren zur Sicherung eines Mikroprozessors, der mindestens ein Hauptprogramm enthält und mit mindestens einem Speicher zusammenwirkt, wobei das Verfahren einen Schritt des Durchführens von Gegenmaßnahmen umfasst, während dessen zusätzliche, nicht für das Hauptprogramm erforderliche Operationen derart durchgeführt werden, dass der Stromverbrauch und/oder die Verarbeitungszeit des Mikroprozessors bei der Verwendung eines für das Hauptprogramm kritischen Codeabschnitts verändert werden,
**dadurch gekennzeichnet, dass** es die folgenden Schritte umfasst:
- Identifizieren mindestens eines Speicherbereichs des oder der Speicher, die kritische Bereiche genannt werden und den Codeabschnitt enthalten oder enthalten können;
- Überwachen der Adressports des oder der Speicher, derart, dass ein Zugriff auf den oder die kritischen Bereich/e ermittelt wird;
- Aktivieren des Schritts des Durchführens von Gegenmaßnahmen, wenn ein Zugriff auf den oder die kritischen Bereich/e ermittelt wird.

2. Verfahren nach Anspruch 1, **dadurch gekennzeichnet, dass** es einen Schritt des Unterbrechens des Schritts des Durchführens von Gegenmaßnahmen umfasst, sobald der oder die kritischen Bereiche nicht mehr benutzt werden.

3. Verfahren nach einem der Ansprüche 1 und 2, **dadurch gekennzeichnet, dass** der Schritt des Durchführens von Gegenmaßnahmen mindestens eine der Operationen umfasst, die zur folgenden Gruppe gehören:
- Ausführen zufälliger mathematischer oder logischer Operationen;
- Duplizieren von Operationen, die durch das Hauptprogramm durchgeführt werden;
- Starten eines sekundären Tarnprogramms.

4. Verfahren nach einem der Ansprüche 1 bis 3, **dadurch gekennzeichnet, dass** die Speicher zur Gruppe gehören, die Folgendes umfasst:
- RAM-Speicher;
- ROM-Speicher;
- EPROM-Speicher;
- EEPROM-Speicher;
- Flash-Speicher.

5. Computerprogrammprodukt, das von einem Kommunikationsnetz heruntergeladen und/oder auf einem maschinenlesbaren Datenträger gespeichert und/oder durch einen Prozessor ausgeführt werden kann, **dadurch gekennzeichnet, dass** es Programmcodebefehle für die Durchführung des Sicherungsverfahrens nach einem der Ansprüche 1 bis 4 umfasst.

6. Gesicherte Mikroprozessorvorrichtung, die mindestens ein Hauptprogramm umfasst und mit mindestens einem Speicher zusammenwirkt, wobei die Vorrichtung Mittel zur Durchführung von Gegenmaßnahmen umfasst, während derer zusätzliche Operationen, die nicht für das Hauptprogramm erforderlich sind, derart durchgeführt werden, dass der Stromverbrauch und/oder die Verarbeitungszeit des Mikroprozessors bei der Verwendung eines für das Hauptprogramm kritischen Codeabschnitts verändert werden,
**dadurch gekennzeichnet, dass** sie umfasst:
- Mittel zum Identifizieren mindestens eines Speicherbereichs des oder der Speicher, die kritische Bereiche genannt werden und den Codeabschnitt enthalten oder enthalten können;
- Mittel zum Überwachen der Adressports des oder der Speicher, derart, dass ein Zugriff auf den oder die kritischen Bereich/e ermittelt wird;
- Mittel zum Aktivieren des Schritts des Durchführens von Gegenmaßnahmen, wenn ein Zugriff auf den oder die kritischen Bereich/e ermittelt wird.

7. Vorrichtung nach Anspruch 6, **dadurch gekennzeichnet, dass** sie die Form einer Mikroprozessorkarte aufweist.
